# Europäisches Patentamt

# European Patent Office

## Office européen des brevets

(11) Veröffentlichungsnummer: **0 045 404**
**B1**

(12) **EUROPÄISCHE PATENTSCHRIFT**

(45) Veröffentlichungstag der Patentschrift:
27.12.85

(51) Int. Cl.⁴: **A 62 B 7/14,** B 01 D 53/04,
B 64 D 13/00

(21) Anmeldenummer: **81105477.4**

(22) Anmeldetag: **13.07.81**

(54) **Vorrichtung zum Bereitstellen von Atemgas.**

(30) Priorität: **31.07.80 DE 3029080**

(43) Veröffentlichungstag der Anmeldung:
**10.02.82 Patentblatt 82/6**

(45) Bekanntmachung des Hinweises auf die Patenterteilung:
**27.12.85 Patentblatt 85/52**

(84) Benannte Vertragsstaaten:
**DE FR GB SE**

(56) Entgegenhaltungen:
**DE - A - 2 837 281**
**GB - A - 1 467 288**
**US - A - 3 659 399**
**US - A - 3 922 149**
**US - A - 4 065 272**

(73) Patentinhaber: **Linde Aktiengesellschaft,
Abraham-Lincoln-Strasse 21, D-6200 Wiesbaden (DE)**

(72) Erfinder: **Beysel, Gerhard, Dr., Mühlpointweg 9a,
D-8190 Wolfratshausen (DE)**
Erfinder: **von Saldern, Rüdiger, An der Loisach 7a,
D-8190 Wolfratshausen (DE)**

(74) Vertreter: **Schaefer, Gerhard, Dr., Linde
Aktiengesellschaft Zentrale Patentabteilung,
D-8023 Höllriegelskreuth (DE)**

**Beschreibung**

Die Erfindung betrifft eine Vorrichtung zum Bereitstellen von Atemgas für Insassen von druckgeregelten Kabinen in Flugzeugen durch Anreicherung von Sauerstoff in Luft in einem mehrere Adsorber aufweisenden Atemgasgenerator, dem eintrittsseitig ein Filter vorgeschaltet und der austrittsseitig mit einer Atemgasauslaßleitung verbunden ist.

Aus der US-A-3 922 149 ist eine Vorrichtung bekannt, bei der bei der Einzelversorgung von Personen mit Atemgas in die Atemgasauslaßleitung 32, 40 ein Atemgasbedarfsregler 48 mit einer Atemmaske geschaltet ist, wobei über eine Leitung 68 (oder 51) ein Notvorratsbehälter 64 (oder 14) angeschlossen ist. Ein bei eventuellen Verfahrensunterbrechungen verwendbarer Notvorrat an sauerstoffreichem Atemgas im Vorratsbehälter 14 wird mit Hilfe desselben Adsorbers 24 erzeugt, mit dem der Sauerstoff in der Luft angereichert wird. Die Vorrichtung wird dabei so betrieben, daß Luft über ein Ventil 12 in den Behälter 24 gelangt, in dem die einzelnen Luftbestandteile zu unterschiedlichen Anteilen adsorbiert werden, Sauerstoff am wenigsten. Das behandelte, mit Sauerstoff angereicherte Gas wird unter erhöhtem Druck dem Vorratsbehälter 14 zugeführt und der Atemmaske. Bei andauernder Adsorption steigt der Druck in dem Behälter 14 an und Ventil 12 schließt immer mehr, so daß immer weniger Luft in den Behälter 24 gelangt. Als Fogle davon weist das aus dem Behälter 24 ausströmende Gas eine abnehmende $O_2$-Konzentration auf. Gleichzeitig, während der Ertrag des Behälters 24 abnimmt, steigt der Ertrag des Vorratsbehälters 14 mit dem Ergebnis, daß das Flugpersonal mit einer $O_2$-Konzentration in der angereicherten Luft versorgt wird, die dem Meeresspiegel äquivalent entspricht. Bei Verfahrensunterbrechungen kann das Flugpersonal für kurze Zeit Luft aus dem Vorratsbehälter 14 und zusätzlich aus dem Notvorratsbehälter 64 erhalten.

Aus der DE-A-2 837 281 ist eine Vorrichtung der eingangs genannten Art bekannt, die ein Filter 4, einen aus mehreren Adsorbern bestehenden Atemgasgenerator 5, eine Atemgasauslaßleitung 7, einen Pufferbehälter 8 sowie ein Regelventil 12 mit nachfolgender Atemmaske 14 aufweist. Zum Betreiben dieser Vorrichtung wird komprimierte Luft durch die Adsorber geleitet und so die $O_2$-Konzentration durch bevorzugte Adsorption von Stickstoff an einem geeigneten Adsorptionsmittel erhöht. Die Menge des die Adsorber durchströmenden Gases, die Taktzeit, der Adsorptionsdruck und das Verhältnis von Adsorptions- zu Desorptionsdruck wird kontrolliert, um die $O_2$-Konzentration so einzustellen, daß sie mit steigender Flughöhe zunimmt, während gleichzeitig die Atemgasmenge (in Normallitern ausgedrückt) abnimmt.

Zur Überbrückung von Ausfällen des Atemgasversorgungssystems (wie Ausfall der Luftversorgung beispielsweise durch Abschalten der Klimaanlage oder plötzlichen Druckabfall in der Kabine durch ein Leck) ist bei diesem System ein Notvorrat an sogenanntem Höhenatmungssauerstoff nötig, der entweder aus Druckflaschen oder aus der Vergasung eines Flüssigvorrates stammt und 99,5% Sauerstoff enthält. Diese Notvorratsbehälter wie auch der Notvorratsbehälter 64 gemäß US-A-3 922 149 nehmen jedoch einen, insbesondere für die engen Flugkabinen von militärischen Maschinen, verhältnismäßig großen Raum ein. Außerdem benötigen alle diese Notversorgungssysteme eine gesonderte Logistik und Wartung.

Der Erfindung liegt daher die Aufgabe zugrunde, eine vereinfachte Vorrichtung zum Bereitstellen von Atemgas mit einem Notvorratsbehälter zur Verfügung zu stellen, mit der die erwähnten Nachteile überwunden werden.

Diese Aufgabe wird bei einer Vorrichtung der eingangs genannten Art erfindungsgemäß dadurch gelöst, daß an die Atemgasauslaßleitung über eine Stichleitung ein Notvorratsbehälter angeschlossen ist, die Adsorber des Atemgasgenerators innerhalb des Notvorratsbehälters angeordnet sind, der Notvorratsbehälter mit einem Adsorptionsmittel für Sauerstoff beschickt ist, in der Atemgasauslaßleitung ein Atemgasbedarfsregler mit einer Atemmaske angeordnet ist und der Atemgasbedarfsregler über eine Leitung mit dem Notvorratsbehälter verbunden ist.

Ähnlich wie bei dem Verfahren der US-A-3 922 149 wird mit der erfindungsgemäßen Vorrichtung ein Notvorrat an Atemgas von denselben Adsorbern aus Luft erzeugt, die auch das normale Atemgas bereitstellen. Im Gegensatz zu der aus der US-A-3 922 149 bekannten Vorrichtung sind jedoch die Adsorber des Atemgasgenerators innerhalb des Notvorratsbehälters angeordnet. Hierdurch wird Platz eingespart und der Einbau im Flugzeug durch die kompakte Anlage erleichtert. Durch die erfindungsgemäße Vorrichtung entfällt überdies die bisherige Wartung des Notvorrates einschließlich der besonderen Logistik. Es ist auch keine Bodenversorgung über beispielsweise Stahlflaschen mehr nötig.

Der Atemgasgenerator enthält beispielsweise drei umschaltbare, jeweils mit einem Adsorptionsmittel für Sauerstoff oder Stickstoff, vorzugsweise Stickstoff, z. B. mit einem zeolithischen Molekularsieb, gefüllte Adsorber. Die Adsorber können im Druckwechsel oder im Temperaturwechsel betrieben werden, wobei es unwichtig ist, welche Spülgase und Desorptionsmittel verwendet werden und ob das angereicherte Gas als Produktgas oder Desorbat erhalten wird. Dennoch bieten sich vorteilhaft Druckwechselverfahren an, da diese im wesentlichen bei gleichbleibender Temperatur ablaufen, somit energetisch sehr günstig sind und außerdem ein schnelles Umschalten der Adsorber möglich machen. Bei Druckwechselbetrieb folgt der Adsorptionsphase eine Regenerierphase (Druckentspannung und Spülung) und eine aus einer oder

mehreren Druckaufbaustufen bestehende Druckaufbauphase.

Der Notvorratsbehälter ist bevorzugt mit einem Adsorptionsmittel für Sauerstoff, beispielsweise einem zeolithischen Molekularsieb vom Typ 5A beschickt, wodurch sich eine vielfache, in der Regel drei- bis vierfache Menge an Atemgas speichern läßt.

Mit Vorteil ist dabei der zwischen den Außenwandungen der Adsorber und der Wandung des Notvorratsbehälters verbliebene Zwischenraum mit dem Adsorptionsmittel für Sauerstoff beschickt.

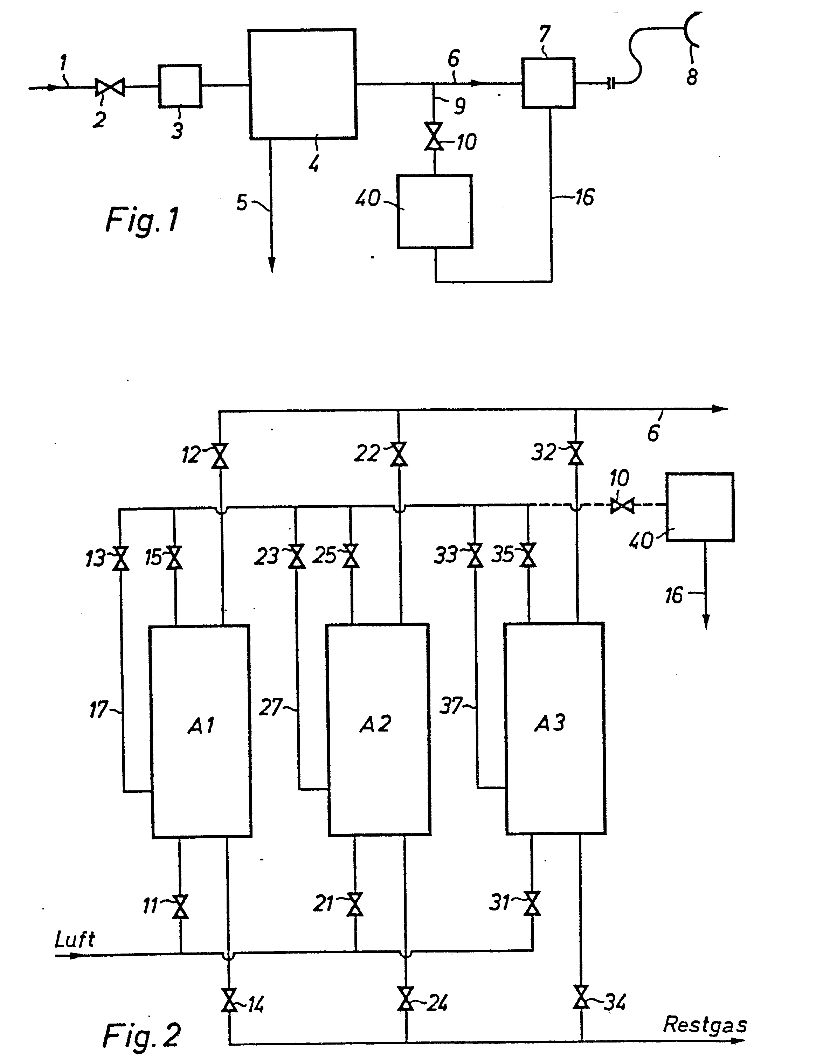

Die Wirkungsweise der erfindungsgemäßen Vorrichtung soll anhand eines Ausführungsbeispieles mit Hilfe von fünf Figuren verdeutlicht werden. Die Figuren 1 und 2 zeigen dabei zum besseren Verständnis die Vorrichtung lediglich schematisch, weshalb die Adsorber außerhalb des Notvorratsbehälters dargestellt worden sind.

Es zeigt

Fig. 1 ein Schema der Vorrichtung,

Fig. 2 eine schematisch dargestellte Anlage mit drei Adsorbern,

Fig. 3 einen Längsschnitt durch einen Notvorratsbehälter mit drei eingebauten Adsorbern,

Fig. 4 eine Draufsicht auf den Notvorratsbehälter mit Adsorbern der Fig. 3 von oben und

Fig. 5 eine Draufsicht auf den Notvorratsbehälter mit Adsorbern der Fig. 3 von unten.

In Fig. 1 gelangt komprimierte Luft, die beispielsweise in einer nicht eingezeichneten Klimaanlage konstant auf 20°C gehalten wird, über eine Leitung 1 und ein Regelventil 2, das den Luftstrom auf ca. 10 bar hält, in einen Filter 3. Dort werden eventuell vorhandene Verunreinigungen, wie Flüssigkeitströpfchen oder feste Teilchen, zurückgehalten. Die so vorbehandelte Luft strömt in einen Atemgasgenerator 4 ein, beispielsweise eine Adsorptionsvorrichtung mit drei umschaltbaren Adsorbern, die im Druckwechselverfahren entsprechend dem zuvor beschriebenen Verfahren betrieben werden. Die Periodendauer beträgt im vorliegenden Fall 12 sec. Das Desorptions- und Spülgas wird über eine Leitung 5 abgezogen. Das mit Sauerstoff angereicherte Atemgas gelangt über eine Leitung 6 in einen Atemgasbedarfsregler 7. Dieser ist im Normalfall so geschaltet, daß das Atemgas direkt in eine Atemmaske 8 und beim Einatmen der betreffenden Person in deren Lungen gelangt.

Der Notvorrat an Atemgas, der z. B. aus 95%igem Sauerstoff besteht, wird nun auf folgende Weise erzeugt:

Bei erhöhter Triebwerksleistung gelangt die aufzuarbeitende Luft unter größerem Druck in die Adsorber, so daß in diesen ebenfalls ein größerer Druck herrscht und ein Atemgas mit erhöhtem Sauerstoffanteil produziert wird, das für den Notvorrat geeignet ist. Das Atemgas tritt über eine Leitung 6 aus dem Atemgasgenerator 4 aus und wird, wie beschrieben, der Atemmaske 8 zugeführt. Ein Teil des Atemgases wird jedoch von der Leitung 6 über eine Stichleitung 9 abgezweigt und gelangt über ein Füllventil 10 in den Notvorratsbehälter 40. Das Füllventil 10 schließt wieder, wenn der Notvorratsbehälter 40 gefüllt ist.

Bei Betriebsunterbrechungen gelangt Atemgas aus dem Notvorratsbehälter 40 über eine Leitung 16 in den Atemgasbedarfsregler 7, der jetzt Leitung 6 sperrt, und damit in die Atemmaske 8.

Fig. 2 zeigt eine Ausführung einer zyklisch arbeitenden Adsorbervorrichtung, bei der es besonders einfach ist, den Notvorrat aufzufüllen. Dabei soll folgende Anfangskonstellation gelten: Adsorber A1 liefert das Produkt, Adsorber A2 wird regeneriert und Adsorber A3 befindet sich im Druckaufbau.

Auf 10 bar komprimierte Luft (z. B. 200 Nl/min.) gelangt über das geöffnete Ventil 11 in den Adsorber A1. Dort wird, beispielsweise von einem zeolithischen Molekularsieb 5A, Stickstoff bevorzugt vor Sauerstoff adsorbiert. Der Adsorber ist mit 2,5 l Molekularsieb beschickt.

Während der ersten Adsorptionsphasen in Adsorber A1 wird über die geöffneten Ventile 15 und 10 sauerstoffreichstes Gas in den Notvorrat 40 geleitet. Dann werden die Ventile 15 und 10 wieder geschlossen und normales Atemgas gelangt während der zweiten Adsorptionsphase über Ventil 12 und Leitung 6 zum nichteingezeichneten Atemgasbedarfsregler.

Nach Abschluß der Adsorptionsphase in Adsorber A1 schließen die Ventile 11 und 12, und Luft gelangt über Ventil 31 auf Adsorber A3. Gleichzeitig werden die Ventile 15 und 23 zum Druckausgleich zwischen den Adsorbern A1 und A2 geöffnet.

Nach Abschluß des Druckausgleiches, der nicht vollständig sein muß, schließen die Ventile 15 und 23 wieder und Ventil 14 öffnet, d. h. der Adsorber A1 wird regeneriert. Dazu strömt über Ventil 14 Restgas ab, und zur besseren Desorption wird ein Teil des Atemgases aus Adsorber A3 über die Ventile 35 und 15 zum Spülen von Adsorber A1 verwendet und ebenfalls über Ventil 14 abgezogen. Nach Erreichen des tiefsten Druckniveaus in Adsorber A1 schließt Ventil 14 und die Regenerierphase ist abgeschlossen.

Nun findet über die geöffneten Ventile 35 und 13 Druckausgleich mit Adsorber A3 statt. Nach Beendigung des Druckausgleichs schließen die Ventile 35 und 13 wieder. Ventil 11 öffnet, und komprimierte Luft gelangt in Adsorber A1, um dort den Druck bis zum Adsorptionsdruck aufzubauen. In der ersten Adsorptionsphase sind dann wieder die Ventile 15 und 10 offen, so daß sauerstoffreiches Gas in den Notvorratsbehälter 40 gelangen kann, während in der zweiten Adsorptionsphase die Ventile 15 und 10 zu sind und Ventil 12 offen ist und Atemgas über Ventil 12 und Leitung 6 geleitet wird usw.

Wärend der Zeit der Adsorptionsphase in Adsorber A1 befindet sich Adsorber A2 in der Regenerierphase, die aus Druckablassen über Ventil 24 und Spülen über die Ventile 15 und 25 besteht, während gleichzeitig in Adsorber A3 der Druckaufbau in zwei Stufen, wie oben beschrieben, erfolgt.

Im Bedarfsfall kann dem Notvorratsbehälter 40 über Leitung 16 Atemgas entnommen werden.

Erfahrungsgemäß liegt der Verbrauch an Atemgas unter Normalbedingungen am Boden bei 20 Nl/min pro Mann, was 12 Nl/min pro Mann in einer Höhe von 4572 m (15 000 Fuß) entspricht. Unter der Annahme, daß der Notvorrat 10 Minuten ausreichen soll, bedeutet das, daß 120 Nl zur Verfügung stehen müssen. Diese werden aber unter einem Druck von 10 bar in den Notvorratsbehälter gepreßt, so daß dieser nur 12 l aufzunehmen braucht. Ist der Notvorratsbehälter außerdem mit einem zeolithischen Molekularsieb gefüllt, so reduziert sich das Volumen des Notvorratsbehälters auf ca. 3 l.

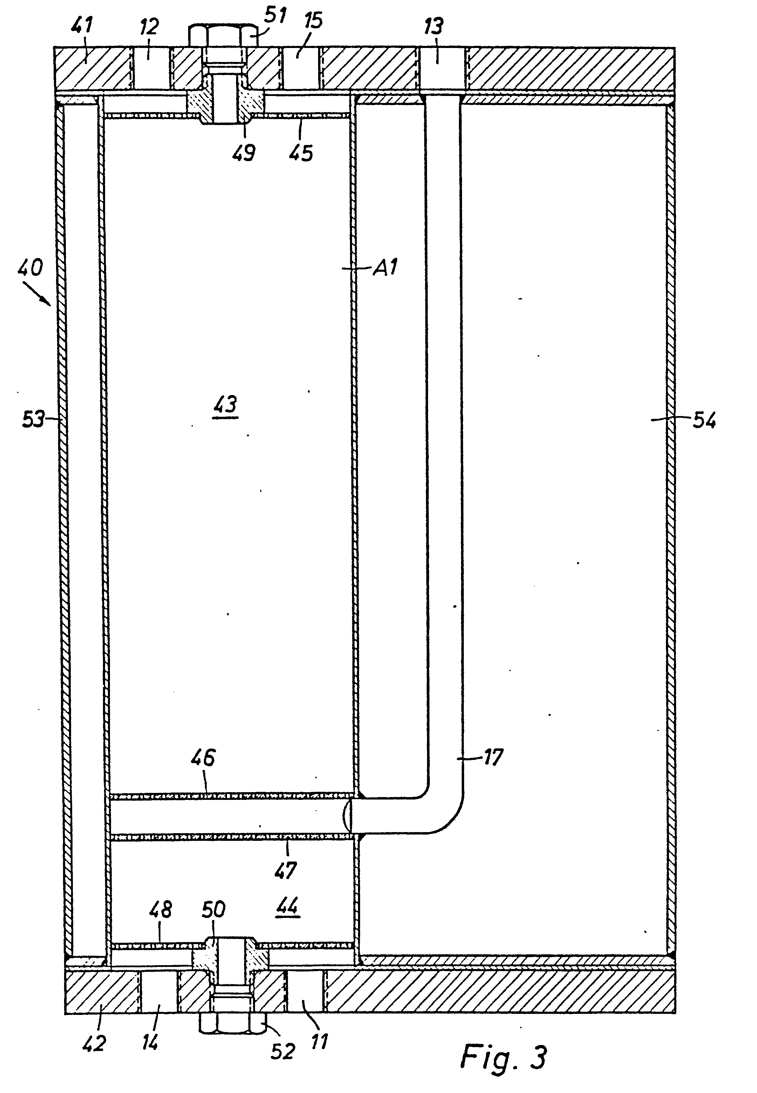

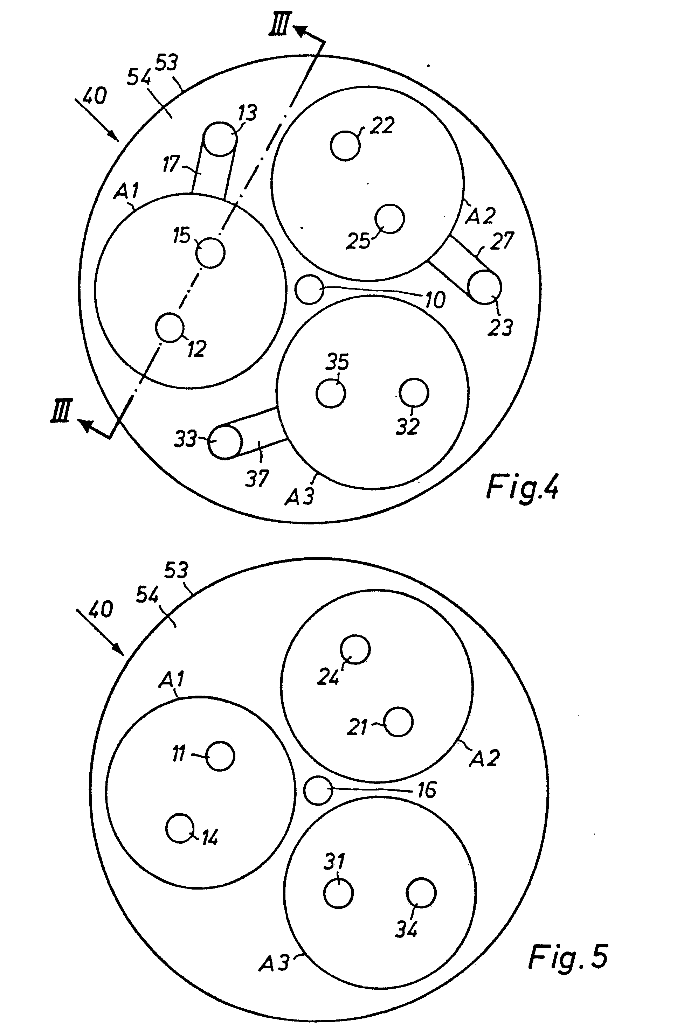

Fig. 3 zeigt den Notvorratsbehälter 40, in dem die drei Adsorber eingebaut sind im Schnitt III-III gemäß Fig. 4, so daß nur Adsorber A1 sichtbar ist. Dieser ist zwischen den Deck- bzw. Bodenplatten 41 bzw. 42 eingeschweißt. Die beiden Adsorptionsräume 43 und 44 sind jeweils oben und durch Siebplatten 45/46 und 47/48 begrenzt und mit Füllstutzen 49 und 50 versehen. Beide Stutzen sind mit Verschlußschrauben 51 und 52 abgeschlossen, die gleichzeitig als Abstandshalter für die obere bzw. untere Siebplatte 45 bzw. 48 dienen.

Befindet sich Adsorber A1 in der Adsorptionsphase, so strömt über Ventil 11 die zu zerlegende Luft ein und über Ventil 12 gemäß Fig. 2 das Produkt ab. Nach Abschluß der Adsorptionsphase findet über Ventil 13 und Leitung 17 ebenfalls gemäß Fig. 2 ein Druckausgleich mit dem in Fig. 3 nicht dargestellten Adsorber A3 statt. Hierzu dienen die an die Leitung 17 anschließenden Siebböden 46 und 47, die einen Gasaustausch zu den Adsorptionsräumen 43 und 44 ermöglichen. Nach dem Druckausgleich schließt Ventil 13, und über Ventil 14 wird Restgas abgezogen.

Der Notvorrat an Atemgas wird von dem zwischen der Wandung 53 des Behälters und den Adsorbern verbleibenden Zwischenraum 54 aufgenommen. Dieser Zwischenraum 54 kann dabei vorteilhaft mit einem Sauerstoff adsorbierenden Mittel beschickt sein. Das sauerstoffreiche Atemgas gelangt dabei in den Raum 54 durch das in Fig. 3 nicht eingezeichnete Ventil 10 und eine, in dieser Figur ebenfalls nicht dargestellte Leitung, die sich zwischen den Ventilen 15 und 10 befindet. Die Entnahme des Notvorrats erfolgt über Leitung 16, die wiederum in Fig. 2 dargestellt ist.

Fig. 4 zeigt die Draufsicht des Notvorratsbehälters 40 von oben, in den die drei Adsorber A1, A2 und A3 eingebaut sind. In Übereinstimmung mit den Fig. 2 und 3 sind die entsprechenden Ventile und Druckausgleichsrohre dargestellt. Die Ventile können wie gezeichnet einzeln angeordnet oder ein Drehschieber sein.

Fig. 5 gibt die Draufsicht desselben Notvorratsbehälters 40 von unten wieder. Auch hier sind die entsprechenden Ventile und außerdem die Leitung 16 zur Entnahme des Atemgases zu erkennen.

## Patentansprüche

1. Vorrichtung zum Bereitstellen von Atemgas für Insassen von druckgeregelten Kabinen in Flugzeugen durch Anreicherung von Sauerstoff in Luft in einem mehrere Adsorber (A1, A2, A3) aufweisenden Atemgasgenerator (4), dem eintrittsseitig ein Filter (3) vorgeschaltet und der austrittsseitig mit einer Atemgasauslaßleitung (6) verbunden ist, dadurch gekennzeichnet, daß an die Atemgasauslaßleitung (6) über eine Stichleitung (9) ein Notvorratsbehälter (40) angeschlossen ist, daß die Adsorber (A1, A2, A3) des Atemgasgenerators (4) innerhalb des Notvorratsbehälters (40) angeordnet sind, daß der Notvorratsbehälter (40) mit einem Adsorptionsmittel für Sauerstoff beschickt ist, daß in der Atemgasauslaßleitung (6) ein Atemgasbedarfsregler (7) mit einer Atemmaske (8) angeordnet ist und daß der Atemgasbedarfsregler (7) über eine Leitung (16) mit dem Notvorratsbehälter (40) verbunden ist.

2. Vorrichtung nach Anspruch 1, dadurch gekennzeichnet, daß der zwischen den Außenwandungen der Adsorber (A1, A2, A3) und der Wandung (53) des Notvorratsbehälters (40) verbliebene Zwischenraum (54) mit dem Adsorptionsmittel für Sauerstoff beschickt ist.

## Claims

1. Apparatus for making respiratory gas available for occupants of pressure-controlled cabins in aircraft by concentrating oxygen in air in a respiratory gas generator (4) which has a plurality of adsorbers (A1, A2, A3) and which, at the input end, is preceded by a filter (3) and, at the output end, is connected to a respiratory gas outlet line (6), characterised in that an emergency storage container (40) is connected to the respiratory gas outlet line (6) by means of a branch line (9); that the adsorbers (A1, A2, A3) of the respiratory gas generator (4) are arranged inside the emergency storage container (40); that the emergency storage container (40) is filled with an adsorbent for oxygen; that a respiratory gas demand regulator (7) with a respirator mask, is arranged in the respiratory gas outlet line (6); and that the respiratory gas demand regulator (7) is connected to the emergency storage container (40) by means of a line (16).

2. Apparatus as claimed in Claim 1, characterised in that the interspace (54) which remains between the outer walls of the adsorbers (A1, A2, A3) and the wall (53) of the emergency storage container (40), is filled with the adsorbent for oxygen.

## Revendications

1. Installation pour l'obtention de gaz respiratoire pour des passagers de cabines réglées en pression dans des avions par enrichissement de l'air en oxygène dans un générateur de gaz respiratoire (4) comportant plusieurs adsorbeurs (A1, A2, A3), en amont de l'entrée duquel est disposé un filtre (3) et dont la sortie est reliée à un conduit de décharge de gaz respiratoire (6), caractérisée en ce que le conduit de décharge de gaz respiratoire (6) est relié par l'intermédiaire d'un conduit de prélèvement (9) à un récipient d'alimentation de secours (40), en ce que les adsorbeurs (A1, A2, A3) du générateur de gaz respiratoire (4) sont disposés à l'intérieur du récipient d'alimentation de secours (40), en ce que le récipient d'alimentation de secours (40) est chargé d'un agent d'adsorption d'oxygène, en ce qu'il est prévu dans le conduit de décharge de gaz respiratoire (6) un régulateur de débit de gaz respiratoire requis (7) associé à un masque respiratoire (8) et en ce que ledit régulateur de débit de gaz respiratoire (7) est relié par l'intermédiaire d'un conduit (16) au récipient d'alimentation de secours (40).

2. Installation selon la revendication 1, caractérisé en ce que l'intervalle (54) défini entre les parois extérieures des adsorbeurs (A1, A2, A3) et la paroi (53) du récipient d'alimentation de Secours (40) est chargé d'un agent d'adsorption d'oxygène.

Fig. 1

Fig. 2

Luft

Restgas

Fig. 3

Fig.4

Fig.5

0 045 404